# EUROPEAN PATENT APPLICATION

(11) **EP 4 344 186 A1**
(43) Date of publication of application: **27.03.2024**
(21) Application number: 22827147.4
(22) Date of filing: 15.04.2022
(51) Int. Cl.: H04N 5/225

(54) **PHOTOGRAPHY APPARATUS AND METHOD, ELECTRONIC DEVICE, AND STORAGE MEDIUM**

(30) Priority: 21.06.2021 CN 202110686374
(71) Applicant: ZTE Corporation, Shenzhen, Guangdong 518057 (CN)
(72) Inventor: ZHANG, Yongliang, Shenzhen, Guangdong 518057 (CN)
(74) Representative: Vossius & Partner Patentanwälte Rechtsanwälte mbB
(86) International application number: PCT/CN2022/087239
(87) International publication number: WO 2022/267645

(57) **Abstract**

Embodiments of the present application relate to the technical field of photography, and disclose a photography apparatus and method, an electronic device, and a storage medium. The photography apparatus in the present application includes: an optical transmitting lens (1100) configured to transmit infrared light to a target object; and an optical receiving lens (1200) configured to receive first reflected infrared light and visible light reflected by the target object; where the visible light and the first reflected infrared light are configured for three-dimensional recognition of the target object. The optical transmitting lens (1100) includes a first floodlight irradiator (1110), an infrared dot matrix projector (1120), and a reflector (1130). The first floodlight irradiator (1110) is configured to emit compensation infrared light. The infrared dot matrix projector (1120) is configured to emit dot matrix projection light. The reflector (1130) is arranged in a light emission path of the optical transmitting lens. Initial emission paths of the dot matrix projection light and the compensation infrared light form an intersection angle, and the dot matrix projection light and the compensation infrared light, after passing through the reflector (1130), are emitted along a merging path.

## Description

### CROSS-REFERENCE TO RELATED APPLICATION(S)

This application is based on and claims priority to Chinese patent application No. 202110686374.3 filed on June 21, 2021, the entire disclosure of which is incorporated herein by reference.

### FIELD

Embodiments of the present application relate to the technical field of photography, and in particular relate to a photography apparatus and method, an electronic device, and a storage medium.

### BACKGROUND

With the development of three-dimensional imaging, some technologies such as structured light measurement, laser scanning, ToF and the like tend to be mature, and the three-dimensional recognition function is gradually equipped in mobile terminals for, for example, face recognition, so that face-scanning is much safer.

Since the three-dimensional recognition device and the forward camera are both provided on the terminal display screen, a position for the three-dimensional recognition device is desired to be reserved in the terminal display screen in advance. Further, since the three-dimensional recognition device includes at least three lenses, the non-display region in the terminal display screen has an area equal to a projection area of at least three lenses. As a result, the terminal display screen may form a "bangs screen", which reduces the aesthetic appearance as well as the user experience. Alternatively, the three-dimensional recognition device may be provided under the terminal display screen, which means that special light transmission processing is desired at a position of the three-dimensional recognition device on the terminal display screen. As a result, the special region subjected to the light transmission processing is different from other normal display regions, and in the case of a plurality of three-dimensional recognition devices, the special region subjected to the light transmission processing has a larger area and thus is further distinguished from other normal display regions, thereby reducing the user experience.

To fulfill the requirement of three-dimensional recognition, the non-normal display region (including the non-display region and the special region subjected to light transmission processing) in the terminal display screen has an area equal to a projection area of at least three lenses, leading to a larger area and reduced user experience.

### SUMMARY

An embodiment of the present application provides a photography apparatus, including: an optical transmitting lens configured to transmit dot matrix projection light and compensation infrared light to a target object; and an optical receiving lens configured to receive first reflected infrared light and visible light reflected by the target object; wherein the visible light and the first reflected infrared light are configured for three-dimensional recognition of the target object; the optical receiving lens includes a first infrared receiver, a visible light receiver and an optical filter; the optical filter is arranged in a light incidence path of the optical receiving lens, and configured to filter and separate incident light to obtain the first reflected infrared light and the visible light which are transmitted along the light incidence path and a separation path perpendicular to the light incidence path; the first infrared receiver is configured to receive the first reflected infrared light, and the visible light receiver is configured to receive the visible light; the optical transmitting lens includes a first floodlight irradiator, an infrared dot matrix projector and a reflector; the first floodlight irradiator is configured to emit the compensation infrared light, and the infrared dot matrix projector is configured to emit the dot matrix projection light; and the reflector is arranged in a light emission path of the optical transmitting lens, wherein the light emission path includes a merging path, an initial emission path of the dot matrix projection light, and an initial emission path of the compensation infrared light, the initial emission paths of the dot matrix projection light and the compensation infrared light form an intersection angle, and the dot matrix projection light and the compensation infrared light, after passing through the reflector, are emitted along the merging path.

An embodiment of the present application provides another photography apparatus, including: an optical transmitting lens configured to transmit infrared light to a target object; and an optical receiving lens configured to receive first reflected infrared light and visible light reflected by the target object; wherein the visible light and the first reflected infrared light are configured for three-dimensional recognition of the target object; the optical receiving lens includes a first infrared receiver, a visible light receiver and an optical filter; the optical filter is arranged in a light incidence path of the optical receiving lens, and configured to filter and separate incident light to obtain the first reflected infrared light and the visible light which are transmitted along the light incidence path and a separation path perpendicular to the light incidence path; the first infrared receiver is configured to receive the first reflected infrared light, and the visible light receiver is configured to receive the visible light; the infrared light includes infrared continuous modulated pulsed light; the optical transmitting lens includes a second floodlight irradiator configured to emit the infrared continuous modulated pulsed light; and the second floodlight irradiator is positioned under the terminal screen, and the first infrared receiver or the visible light receiver is positioned under the second floodlight irradiator.

An embodiment of the present application further provides a photography method, including: controlling an optical transmitting lens to transmit dot matrix projection light and compensation infrared light to a target object; and controlling an optical receiving lens to receive first reflected infrared light and visible light reflected by the target object; wherein the visible light and the first reflected infrared light are configured for three-dimensional recognition of the target object; the optical receiving lens includes a first infrared receiver, a visible light receiver and an optical filter; the optical filter is arranged in a light incidence path of the optical receiving lens, and configured to filter and separate incident light to obtain the first reflected infrared light and the visible light which are transmitted along the light incidence path and a separation path perpendicular to the light incidence path; the first infrared receiver is configured to receive the first reflected infrared light, and the visible light receiver is configured to receive the visible light; the optical transmitting lens includes a first floodlight irradiator, an infrared dot matrix projector and a reflector; the first floodlight irradiator is configured to emit the compensation infrared light, and the infrared dot matrix projector is configured to emit the dot matrix projection light; and the reflector is arranged in a light emission path of the optical transmitting lens, wherein the light emission path includes a merging path, an initial emission path of the dot matrix projection light, and an initial emission path of the compensation infrared light, the initial emission paths of the dot matrix projection light and the compensation infrared light form an intersection angle, and the dot matrix projection light and the compensation infrared light, after passing through the reflector, are emitted along the merging path.

An embodiment of the present application further provides a photography method, including: controlling an optical transmitting lens to transmit infrared light to a target object; controlling an optical receiving lens to receive first reflected infrared light and visible light reflected by the target object; wherein the visible light and the first reflected infrared light are configured for three-dimensional recognition of the target object; the optical receiving lens includes a first infrared receiver, a visible light receiver and an optical filter; the optical filter is arranged in a light incidence path of the optical receiving lens, and configured to filter and separate incident light to obtain the first reflected infrared light and the visible light which are transmitted along the light incidence path and a separation path perpendicular to the light incidence path; the first infrared receiver is configured to receive the first reflected infrared light, and the visible light receiver is configured to receive the visible light; the infrared light includes infrared continuous modulated pulsed light; the optical transmitting lens includes a second floodlight irradiator configured to emit the infrared continuous modulated pulsed light; and the second floodlight irradiator is positioned under the terminal screen, and the first infrared receiver or the visible light receiver is positioned under the second floodlight irradiator.

An embodiment of the present application further provides an electronic device, including: at least one processor; and a memory in communicative connection with the at least one processor; the memory stores instructions executable by the at least one processor thereon which, when executed by the at least one processor, cause the at least one processor to perform the photography method as described above.

An embodiment of the present application further provides a computer-readable storage medium having a computer program stored thereon which, when executed by a processor, causes the photography method as described above to be implemented.

### BRIEF DESCRIPTION OF THE DRAWINGS

FIG. 1 is a schematic structural diagram of a photography apparatus for implementing structured light according to an embodiment of the present application;
FIG. 2 is a schematic diagram showing a layout of a three-dimensional recognition device on a terminal in the related art;
FIGs. 3a to 3c are schematic diagrams showing three arrangement schemes of devices involved in three-dimensional recognition in the related art;
FIG. 4 is a schematic structural diagram of a photography apparatus for implementing monocular structured light according to another embodiment of the present application;
FIG. 5 is a schematic structural diagram of a photography apparatus for implementing binocular structured light according to an embodiment of the present application;
FIG. 6 is a schematic diagram illustrating a position of a light sensing device according to an embodiment of the present application;
FIG. 7 is a schematic structural diagram of a photography apparatus for implementing TOF according to an embodiment of the present application;
FIG. 8 is a flowchart of a photography method according to an embodiment of the present application;
FIG. 9 is a flowchart of a photography method according to another embodiment of the present application; and
FIG. 10 is a schematic diagram of an electronic device according to an embodiment of the present application.

### DETAILED DESCRIPTION OF EMBODIMENTS

To better clarify the objects, technical solutions and advantages of the embodiments of the present application, embodiments of the present application will be described in detail below with reference to the accompanying drawings. However, it will be appreciated by those of ordinary skill in the art that numerous technical details are set forth in various embodiments of the present application to provide a better understanding of the present application. However, the technical solutions claimed in the present application can be implemented even without these technical details or based on various changes and modifications based on the following embodiments. The following embodiments are divided for convenience of description, and should not constitute any limitation to the specific implementation of the present application, and the embodiments may be mutually incorporated and referred to without contradiction.

A main object of the embodiments of the present application is to provide a photography apparatus and method, an electronic device, and a storage medium which can reduce an area of the non-normal display region in the terminal display screen.

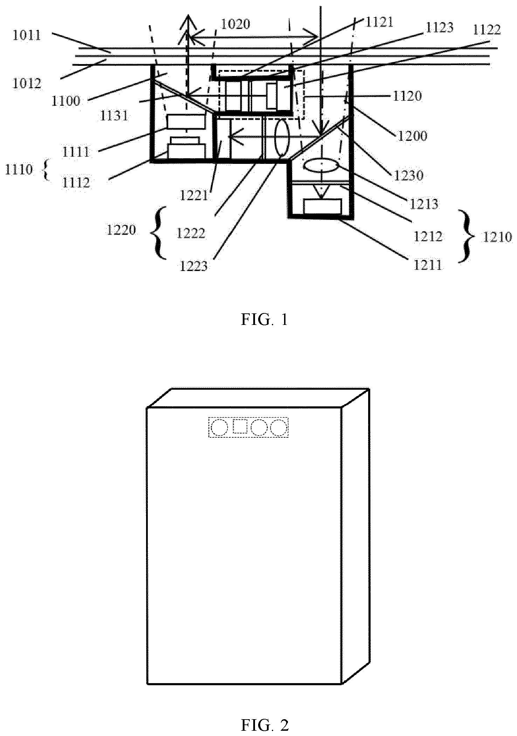

An embodiment of the present application relates to a photography apparatus which, as shown in FIG. 1, may include, but is not limited to:
an optical transmitting lens 1100 configured to transmit dot matrix projection light and compensation infrared light to a target object;
an optical receiving lens 1200 configured to receive first reflected infrared light and visible light reflected by the target object;
wherein the visible light and the first reflected infrared light are configured for three-dimensional recognition of the target object. The first reflected infrared light is configured to construct depth information of the target object, the visible light is configured to construct a two-dimensional image of the target object, and the depth information and the two-dimensional image are used for constructing a three-dimensional image of the target obj ect;
wherein the optical receiving lens 1200 includes a first infrared receiver 1210, a visible light receiver 1220, and an optical filter 1230;
the optical filter 1230 is arranged in a light incidence path of the optical receiving lens 1200, and configured to filter and separate incident light to obtain the first reflected infrared light and the visible light which are transmitted along the light incidence path and a separation path perpendicular to the light incidence path;
the first infrared receiver 1210 is configured to receive the first reflected infrared light, and the visible light receiver 1220 is configured to receive the visible light;
the optical transmitting lens 1100 includes a first floodlight irradiator 1110, an infrared dot matrix projector 1120, and a reflector 1130. The infrared dot matrix projector 1120 is configured to emit dot matrix projection light, and the first floodlight irradiator 1110 is configured to emit compensation infrared light;
the reflector 1130 is arranged in a light emission path of the optical transmitting lens 1100. The light emission path includes a merging path, an initial emission path of the dot matrix projection light, and an initial emission path of the compensation infrared light, the initial emission paths of the dot matrix projection light and the compensation infrared light form an intersection angle, and the dot matrix projection light and the compensation infrared light, after passing through the reflector, are emitted along the merging path.

The photography apparatus of the embodiments may be applied to mobile terminals such as mobile phones, tablets, customer premise equipment (CPE), smart home systems, and the like, and may function in various three-dimensional recognition application scenarios, such as face recognition, AR, VR, three-dimensional modeling, motion sensing games, holographic image interaction, 3D beauty, remote videophone, cloud real-time video, and the like. The optical receiving lens 1200 may act as a device for implementing a three-dimensional recognition function, as well as a device for implementing a forward photography function. The visible light receiver 1220 in the optical receiving lens 1200 may receive visible light during implementation of the three-dimensional recognition function so that the mobile terminal generates a two-dimensional image, and may receive visible light incident into the optical receiving lens 1200 when the optical receiving lens 1200 is used as a general forward camera so that the mobile terminal generates a photographic two-dimensional image. In the implementation of three-dimensional recognition, the mobile terminal may control the photography apparatus to make the optical transmitting lens 1100 transmit infrared light toward a target object, such as a face, and make the optical receiving lens 1200 to receive first reflected infrared light and visible light reflected by the target object, so that the mobile terminal may construct depth information of the target object according to the received first reflected infrared light, construct a two-dimensional image of the target object according to the received visible light, and construct a three-dimensional image of the target object according to the depth information and the two-dimensional image.

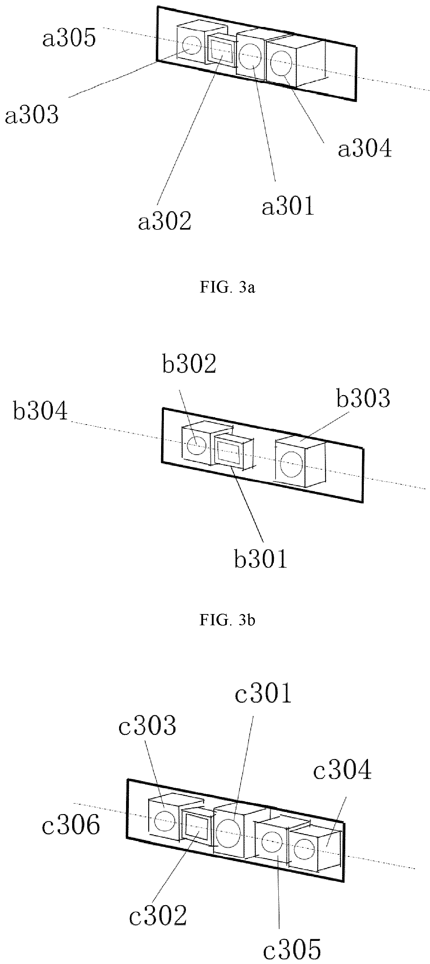

As shown in FIG. 2, most manufacturers deploy all devices involved in three-dimensional recognition in a preset non-display region (such as a "bangs region") in the display screen of the mobile terminal. Since many devices are involved in three-dimensional recognition, the "bangs region" has a relatively large area and forms a barrier to full screen. Even if the photography apparatus for implementing three-dimensional recognition is positioned under the screen, the photography apparatus for three-dimensional recognition may correspond to a relatively large area of light-transmitting region on the screen since the three-dimensional recognition involves many devices, which may lead to a greater display difference on the display screen and thus influence the user experience. Different types of three-dimensional recognition implementation involve different devices. As shown in FIG. 3, forward three-dimensional recognition of a mobile terminal mainly includes the following schemes: (a) monocular structured light, (b) time of flight (TOF), and (c) binocular structured light. In the monocular structured light scheme, an infrared dot matrix projector a301 projects speckle or coded structured light to a target object, a floodlight irradiator a302 (a low-power floodlight irradiator) is included, an infrared camera a303 receives the reflected infrared light reflected by the target object, and an RGB camera a304 receives visible light reflected by the target object, where the four devices are sequentially arranged in a three-dimensional recognition region on a terminal along a baseline a305. A processor constructs depth information of the target object according to the reflected infrared light received by the infrared camera a303, constructs a two-dimensional image of the target object according to the visible light received by the RGB camera a304, and constructs a three-dimensional image of the target object according to the depth information and the two-dimensional image. In the TOF scheme, a floodlight irradiator b301 (a high-power floodlight irradiator) emits infrared continuous modulated pulsed light to a target object, an infrared camera b302 receiving the reflected pulsed light reflected by the target object, and an RGB camera b303 receives visible light reflected by the target object, where the three devices are sequentially arranged in a three-dimensional recognition region on a terminal along a baseline b304. A processor constructs depth information of the target object according to the reflected pulsed light received by the infrared camera a302, constructs a two-dimensional image of the target object according to the visible light received by the RGB camera b303, and constructs a three-dimensional image of the target object according to the depth information and the two-dimensional image. In the binocular structured light scheme, an infrared dot matrix projector c301 projects speckle or coded structured light to a target object, a floodlight irradiator c302 (a low-power floodlight irradiator) is included, infrared cameras c303 and c304 receives the reflected infrared light reflected by the target object, and an RGB camera c305 receives visible light reflected by the target object, where the five devices are sequentially arranged in a three-dimensional recognition region on a terminal along a baseline c306. A processor constructs depth information of the target object according to the reflected infrared light received by the infrared cameras c303 and c304, constructs a two-dimensional image of the target object according to the visible light received by the RGB camera c305, and constructs a three-dimensional image of the target object according to the depth information and the two-dimensional image.

The above three-dimensional recognition devices cover a relatively large projection area, and are generally distributed in the "bangs region" at the top of the display screen. When these three-dimensional recognition devices cannot be arranged under the screen for application, the only countermeasure is to exclude this region from the screen display region, which reduces the effective display region of the display screen, and affects the overall aesthetic appearance to a certain extent. Even if the mobile terminal has been equipped with an under-display camera, such an application state needs special processing to enhance transmittance of the display region on the corresponding terminal screen (mainly an OLED screen of certain transmittance). That is, the light transmission amount is increased by reducing RGB pixels so that this display region always presents a different display effect from the rest more or less. Since more three-dimensional recognition devices are used instead of a simple under-display camera device, the region of the display screen subjected to the special processing for increasing transmittance has a notably increased area in the under-display three-dimensional recognition application, and therefore, the different display region can be favorably reduced by reducing the area of the region subjected to the special processing. In this case, simplifying the under-display camera and the under-display three-dimensional recognition device is desired. The most straightforward simplification is to reduce the number of under-display three-dimensional recognition devices.

In this embodiment, the photography apparatus may be configured as an under-display camera which is disposed under the display screen of the mobile terminal so that light enters a sensor only through a light-transmitting region on the screen of the mobile terminal during shooting. The photography apparatus may be configured as a normal forward camera, and a non-display region is reserved for the photography apparatus on the display screen of the mobile terminal to form a "bangs screen", a "water drop screen", or the like. In the photography apparatus according to the embodiment, an optical transmitting lens is used to transmit infrared light to a target object, and an optical receiving lens is used to receive the reflected infrared light and visible light reflected by the target object, so that depth information and a two-dimensional image for constructing a three-dimensional image of the target object are acquired, where the optical receiving lens receives first reflected infrared light via an internal first infrared receiver, and receives visible light via an internal visible light receiver, and by providing an optical filter in the light incidence path, the first reflected infrared light and the visible light are separated from the incident light, so that the two types of light can be received simultaneously by a single optical receiving lens. A first floodlight irradiator, an infrared dot matrix projector, and a reflector are disposed on the optical transmitting lens, where the reflector controls the dot matrix projection light and the compensation infrared light forming an intersection angle to be both emitted along a merging path, so that the dot matrix projection light and the compensation infrared light can be emitted from a single lens of the optical transmitting lens. The structured light scheme for three-dimensional recognition is realized by multiplexing the optical receiving lens and the optical transmitting lens, and the number of lenses required for three-dimensional recognition is reduced. As a result, the number of lenses used for structured light three-dimensional recognition on the display screen are reduced from at least four to two, and thus, the area occupied by the optical transmitting lens and the optical receiving lens in the display screen can be simply processed to reduce the area that needs non-normal display processing in the terminal display screen, increase an area for normal display in the terminal display screen, and improve the user experience.

The implementation details of the photography apparatus according to this embodiment will be described in detail below. The following description is provided merely for facilitating understanding of the implementation details, and is not necessary for implementing the solution.

As shown in FIG. 1, an optical transmitting lens 1100 and an optical receiving lens 1200 may be disposed under a terminal display screen 1010. The terminal display screen 1010 may be composed of a touch panel (TP) 1011 and a liquid crystal display (LCD) 1012. The optical transmitting lens 1100 emits infrared light that passes through a transmission light-transmitting region of the terminal display screen 1010 before being emitted toward a target object. The optical receiving lens 1200 receives incident light that passes through a reception light-transmitting region of the terminal display screen 1010, and separates reflected infrared light and visible light from the incident light. The optical receiving lens 1200 includes a first infrared receiver 1210, a visible light receiver 1220, and an optical filter 1230. The optical filter 1230 is arranged in a light incidence path of the optical receiving lens 1200, and forms an angle of 45 degrees with respect to the incident light. The optical filter 1230 may be a visible/infrared color separation filter made of a special filter film. When the incident light and the optical filter 1230 forms an incident angle of 45 degrees, the reflectivity at the visible light band of 0.3 µm to 0.6 µm is greater than 90%, and the near-infrared transmittance at 0.75 µm to 2.5 µm is greater than 90%, so that the reflected infrared light can pass through the optical filter 1230 to reach the first infrared receiver 1210 under the optical filter, and the visible light can be reflected to the visible light receiver 1220 in the separation path. The first infrared receiver 1210 includes an infrared sensitive substrate 1211, an infrared low-pass filter 1212, and a lens assembly 1213. The lens assembly 1213 is configured to collect the first reflected infrared light and a small part of visible light reflected by the optical filter 1230. The infrared low-pass filter 1212 is configured to filter a small part of visible light reflected by the optical filter 1230, and allow transmission of merely the first reflected infrared light, so that the infrared sensitive substrate 1211 acquires merely the first reflected infrared light. The infrared sensitive substrate 1211 is provided with an infrared CMOS image sensor, also called "CIS" dedicated chip. The visible light receiver 1220 includes a visible light sensitive substrate 1221, an infrared cut-off filter 1222, and a lens assembly 1223. The lens assembly 1223 is configured to collect the visible light and a small part of the first reflected infrared light reflected by the optical filter 1230. The infrared cut-off filter 1222 is configured to filter a small part of the first reflected infrared light reflected by the optical filter 1230, and allow transmission of merely the visible light, so that the visible light sensitive substrate 1221 acquires merely the visible light. The visible light sensitive substrate 1221 is provided with a CIS dedicated chip. The lens assembly 1213 and the lens assembly 1223 may be each composed of wafer level optics lenses (WLOs).

In practical applications, devices for the reflected light band and the transmitted light band may be exchanged by changing filtering characteristics of the visible/infrared color separation filter, so as to exchange propagation paths of the first reflected infrared light and the visible light, and thus exchange positions of the visible light receiver 1220 and the infrared receiver 1210.

In this embodiment, the infrared dot matrix projector and the first floodlight irradiator may emit infrared light of different bands. However, the different bands are limited to different near infrared bands. For example, one of the infrared dot matrix projector and the first floodlight irradiator is located at near infrared short waves (780 to 1100 nm), while the other is located at near infrared long waves (1100 to 2526 nm). A distance between optical centers of the optical transmitting lens and the optical receiving lens is taken as a baseline, which may be a conventional baseline or a micro baseline. The monocular structured light employs active three-dimensional measurement, and by means of the baseline, a spatial position of each pixel is estimated, and thus a distance between an object and a lens is measured. In other words, depth information is obtained. A depth range measured by a binocular camera is related to the baseline, and the larger the baseline distance is, the greater the depth range can be measured. The micro baseline means a very short distance between the two lenses, and that despite the short measuring distance, the advantages of structured light near-distance applications are obtained, and the internal overall layout of the mobile terminal which is already spatially compact is further improved. In the photography apparatus, a first floodlight irradiator, an infrared dot matrix projector, and a reflector are disposed on the optical transmitting lens, and the reflector controls the dot matrix projection light and the compensation infrared light to be both emitted along a merging path, so that the dot matrix projection light and the compensation infrared light can be emitted from a single lens of the optical transmitting lens, thereby implementing the structured light scheme for three-dimensional recognition. For the purpose of easy drawing, each intersection angle formed by the dot matrix projection light and the compensation infrared light is drawn as a right angle in the present application.

Specifically, the photography apparatus may be configured to implement a monocular structured light scheme for three-dimensional recognition. The intersection angle formed by the initial emission paths of the dot matrix projection light and the compensation infrared light meets a total reflection condition of the reflector. The reflector 1130 may be an infrared total reflection lens, namely the optical transmitting lens 1100, and may include a first floodlight irradiator 1110, an infrared dot matrix projector 1120, and an infrared total reflection lens. The infrared light includes the dot matrix projection light emitted from the infrared dot matrix projector 1120, and the compensation infrared light emitted from the first floodlight irradiator 1110. The infrared total reflection lens is arranged in a light emission path of the optical transmitting lens 1100, and configured to reflect and transmit the dot matrix projection light and the compensation infrared light at the same time, and emit the same along the merging path.

In one example, the first floodlight irradiator 1110 may be disposed under the infrared total reflection lens. In other words, the initial emission path of the first floodlight irradiator 1110 may be collinear with the merging path. The infrared total reflection lens reflects and emits the dot matrix projection light emitted from the infrared dot matrix projector 1120, and transmits the compensation infrared light emitted from the first floodlight irradiator 1110 to the outside. The first floodlight irradiator 1110 may include a diffusion sheet 1111 and a low-power vertical-cavity surface-emitting laser (VCSEL) 1112. The infrared dot matrix projector 1120 may include a diffractive optical element (DOE) 1121, a high-power VCSEL 1122, and a WLO 1123. To conserve the under-display space of the mobile terminal, the infrared dot matrix projector 1120 and the visible light receiver 1220 in the separation path of the optical receiving lens 1200 are both located under baselines of the optical transmitting lens 1100 and the optical receiving lens 1200. A baseline 1020 may have a conventional baseline length or a micro baseline length. In a micro baseline state, the optical transmitting lens 1100 and the optical receiving lens 1200, each having composite devices inside, can minimize a local region in the LCD display region where special processing is desired to increase the transmittance. Meanwhile, the composite devices in the two lenses are tightly interwoven under the micro baseline, so that integration and standardization are realized, and technical parameters of, for example dual-camera calibration, can be debugged to a substantially stable state before the integrated output, so that the workload of multiple times of parameter calibration after separated devices are assembled into a whole machine is effectively reduced. It will be understood that in this embodiment, positions of the infrared dot matrix projector 1120 and the first floodlight irradiator 1110 may be exchanged.

The infrared dot matrix projection light may adopt speckle structured light or coded structured light, and the baseline may have a very small length and may be a micro baseline. Under the condition of natural light illumination and passive imaging measurement, the imaging system is limited in the imaging measurement and accurate tracking capability of a long-distance target due to the influence of various background radiations. By illuminating far, small and dark targets or local parts thereof in a micro baseline laser active illumination and composite illumination mode, the influence of background radiation can be reduced, and the accurate tracking and clear imaging capability of the system on the far, small and dark targets can be improved. The working principle of the laser active illumination surveillance system is substantially the same as that of a Lidar. All targets or key characteristic parts thereof are illuminated by adjusting a focusing state (divergence angle) of the emitted laser beam, so that the detection requirements of the receiving system are met, and the aims of imaging and accurately tracking the targets are fulfilled.

In addition, while operating simultaneously, the first floodlight irradiator 1110 and the infrared dot matrix projector 1120 may each employ a relatively narrow spectrum, and the first infrared receiver 1210 may employ a relatively broad spectrum. In this case, the first floodlight irradiator 1110 can function to compensate light under the condition of either dark night or bright daytime, and the processor, at the first infrared receiver 1210 of a broad spectrum, can receive the structured light from the infrared dot matrix projector and the non-structured light from the first floodlight irradiator reflected by the target object simultaneously. Therefore, the target identification capability can be enhanced through fusion calculation, while the defect that diffracted light of the dot matrix projection rapidly dissipates due to an increased distance can be effectively overcome.

The infrared total reflection lens has both total reflection and transmission characteristics, and can directly transmit the infrared non-structured light emitted from the first floodlight irradiator 1110, while totally reflect the infrared structured light emitted from the infrared dot matrix projector 1120. The condition for total reflection is that light is emitted from an optically denser medium to an optically thinner medium, with an incident angle being greater than or equal to a critical angle. The embodiments of the present disclosure collectively adopt the requirement of being greater than the critical angle, and a critical state is reached when the refraction angle is 90 degrees. Therefore, in general, the initial emission path of the light before total reflection and the merging path after total reflection are not perpendicular to each other, but form an obtuse angle. In this case, the infrared dot matrix projector in FIG. 1 is generally not placed horizontally, but obliquely, with the left higher than the right. Therefore, the illustration of FIG. 1 is given merely out of a position normalized perspective.

In this embodiment, in the photography apparatus, a first floodlight irradiator, an infrared dot matrix projector, and an infrared total reflection lens are disposed on the optical transmitting lens, and the intersection angle formed by the dot matrix projection light and the compensation infrared light meets a total reflection condition of the reflector, so that the infrared total reflection lens can emit the dot matrix projection light and the compensation infrared light simultaneously along the merging path, and the dot matrix projection light and the compensation infrared light can be emitted from a single lens of the optical transmitting lens, thereby implementing the structured light scheme for three-dimensional recognition.

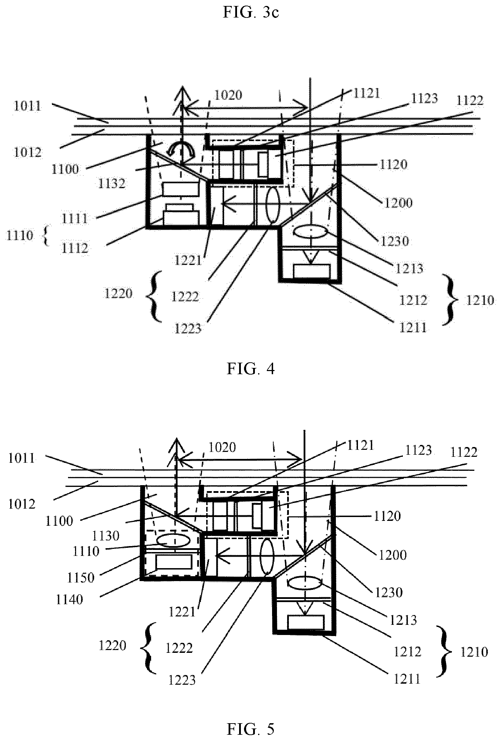

In another example, as shown in FIG. 4, the reflector may be a movable infrared reflector 1132, that is, the optical transmitting lens 1100, and may include a first floodlight irradiator 1110, an infrared dot matrix projector 1120, and a movable infrared reflector 1132. The infrared light includes the dot matrix projection light emitted from the infrared dot matrix projector 1120, and the compensation infrared light emitted from the first floodlight irradiator 1110. The movable infrared reflector 1132 is arranged in a light emission path of the optical transmitting lens 1100, and configured to control the dot matrix projection light and the compensation infrared light to be emitted along the merging path in a time-sharing manner. The initial emission paths of the dot matrix projection light and the compensation infrared light may be perpendicular to each other, or may form any other angle, as long as it is ensured that both the dot matrix projection light and the compensation infrared light can be emitted along the merging path after passing through the infrared reflector 1132. The first floodlight irradiator 1110 may be disposed under the movable infrared reflector 1132.

Since the movable infrared reflector 1132 is opaque to infrared light, the infrared dot matrix projector and the floodlight irradiator cannot operate simultaneously. Therefore, the movable infrared reflector 1132 is controlled by a system processor to operate in an inclined state and a vertical state in a time-sharing manner. When the movable infrared reflector 1132 is in the inclined state, the infrared compensation light emitted from the first floodlight irradiator 1110 is blocked, while the infrared light projected by the infrared dot matrix projector 1120 is reflected; and when the movable infrared reflector 1132 is in the vertical state, a light path for the infrared dot matrix projector 1120 is blocked, while a light path for the first floodlight irradiator 1110 is smooth and can emit infrared light. In this case, a more general operating mode can be adopted. Therefore, the first floodlight irradiator 1110 under the optical transmitting lens 1100 is firstly started, mainly for pre-judging floodlight irradiation of the target object, and a light source (e.g., infrared ray) of a relatively large irradiation angle is projected onto a surface of an object (e.g., a face). Then, the light source reflected from the object is received by the optical receiving lens 1200. After calculation by a processor or other elements, it is roughly determined whether the object is a face. If it is determined that the object is a face, the infrared dot matrix projector 1120 projects a plurality of light spots (e.g., thousands to tens of thousands) onto the face, and the optical receiving lens 1200 receives the changes in the reflected light spots, so that a virtual face surface profile can be calculated and used to precisely determine whether the detected face is the user of the terminal or any other authenticated person. It will be understood that positions of the infrared dot matrix projector 1120 and the first floodlight irradiator 1110 may be exchanged.

In this embodiment, in the photography apparatus, a first floodlight irradiator, an infrared dot matrix projector, and a movable infrared reflector are disposed on the optical transmitting lens, and the reflector controls the dot matrix projection light and the compensation infrared light perpendicular to each other to be emitted along the merging path in a time-sharing manner, so that the dot matrix projection light and the compensation infrared light can be emitted from a single lens of the optical transmitting lens, thereby implementing the structured light scheme for three-dimensional recognition.

Further, as shown in FIG. 5, the photography apparatus may be configured to implement a binocular structured light scheme for three-dimensional recognition. Compared with the photography apparatus shown in FIG. 4, the optical transmitting lens 1100 for implementing the binocular structured light scheme for three-dimensional recognition further includes: a second infrared receiver 1140 and a rotating device 1150. The second infrared receiver 1140 is configured to receive second reflected infrared light reflected by the target object. The rotating device 1150 is provided with the second infrared receiver 1140 on one side and the infrared dot matrix projector 1120 or the first floodlight irradiator 1110 on the other side. The rotating device 1150 is configured to rotate, after the infrared dot matrix projector 1120 or the first floodlight irradiator 1110 emits the dot matrix projection light or the compensation infrared light, to the other side so that the second infrared receiver 1140 receives the second reflected infrared light. Transmitting the infrared light to the target object and receiving the second reflected infrared light reflected by the target object are performed in a time-sharing manner.

When the first floodlight irradiator 1110 is operated, infrared light is received only by the first infrared receiver 1210 of the optical receiving lens 1200. After the infrared dot matrix projector 1120 emits dot matrix projection light, the processor controls the rotating device 1150 to rotate so that the first floodlight irradiator 1110 which originally faces upward is rotated to a lower side, and the second infrared receiver 1140 which originally faces downward is rotated to an upper side. As a result, the first infrared receiver 1210 and the second infrared receiver 1140 simultaneously receive the first reflected infrared light and the second reflected infrared light reflected by the target object, and the system processor performs calculation fusion on data of the target object received by the two infrared receivers to implement three-dimensional recognition.

The infrared rays emitted from the first floodlight irradiator 1110 and received by the second infrared receiver 1140 can both pass through the infrared total reflection lens 1131, and since the incident angles in both directions are far less than the critical angle of total reflection, an ideal infrared penetration effect can be achieved. Therefore, the binocular structured light scheme can also be applied based on the photography apparatus shown in FIG. 1.

The binocular structured light is adopted in the mobile terminal mainly due to the consideration that coded light spots emitted from a monocular structured light infrared dot matrix projector tend to be submerged by sunlight. With the binocular structured light, the structured light may be used to measure depth information in an indoor environment, and a pure binocular mode may be adopted when outdoor illumination leads to failure of the structured light, thereby improving the reliability and the anti-interference capability.

In this embodiment, in the photography apparatus, a first floodlight irradiator, an infrared dot matrix projector, and a rotating device are disposed on the optical transmitting lens, and after the infrared dot matrix projector or the first floodlight irradiator emits the dot matrix projection light or the compensation infrared light, the rotating device rotates to the other side so that the second infrared receiver receives the second reflected infrared light. Therefore, transmitting the infrared light to the target object and receiving the second reflected infrared light reflected by the target object may be performed in a time-sharing manner. In other words, both the optical transmitting lens and the optical receiving lens may be configured to receive the first reflected infrared light and the second reflected infrared light reflected by the target object. Therefore, a binocular structured light scheme for three-dimensional recognition is implemented.

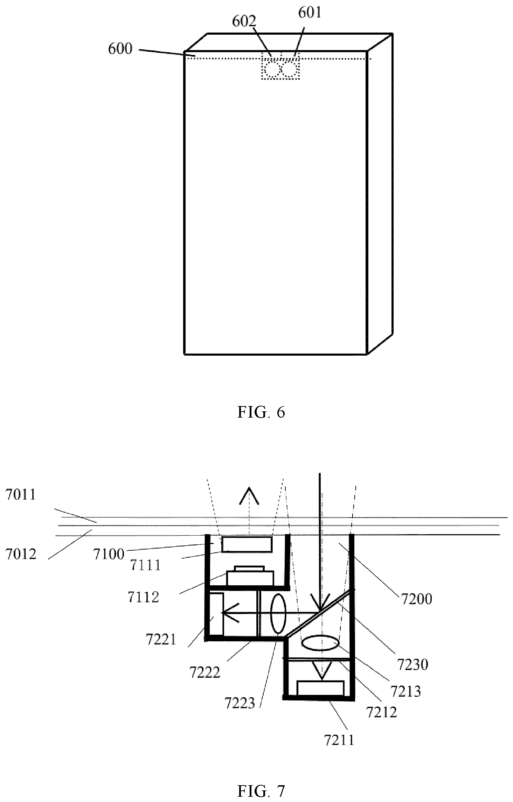

In one example, the photography apparatus further includes: a light sensing device positioned in a first non-display region 601 between a light-transmitting region of the optical transmitting lens and an edge of a terminal screen, as shown in FIG. 6, or a second non-display region 602 between a light-transmitting region of the optical receiving lens and the edge of the terminal screen. Therefore, in an extremely narrow non-display region 600 at the top of the display screen, a near-range light sensor, an ambient light sensor, and a distance sensor for predicting use of a target by the structured light, such as a small-sized one-dimensional TOF sensor, are arranged.

In the photography apparatus of this embodiment, by providing the distance sensor for predicting the target in the first non-display region and the second non-display region, the accuracy of three-dimensional recognition, as well as the user experience, can be further improved.

An embodiment of the present application relates to a photography apparatus for implementing a TOF scheme for three-dimensional recognition, which, as shown in FIG. 7, includes:
an optical transmitting lens 7100 configured to transmit infrared light to a target obj ect;
an optical receiving lens 7200 configured to receive first reflected infrared light and visible light reflected by the target object;
wherein the visible light and the first reflected infrared light are configured for three-dimensional recognition of the target object. The first reflected infrared light is configured to construct depth information of the target object, the visible light is configured to construct a two-dimensional image of the target object, and the depth information and the two-dimensional image are used for constructing a three-dimensional image of the target obj ect;
wherein the optical receiving lens 7200 includes a first infrared receiver 7210, a visible light receiver 7220, and an optical filter 7230;
the optical filter 7230 is arranged in a light incidence path of the optical receiving lens 7200, and configured to filter and separate incident light to obtain the first reflected infrared light and the visible light which are transmitted along the light incidence path and a separation path perpendicular to the light incidence path;
the first infrared receiver 7210 is configured to receive the first reflected infrared light, and the visible light receiver 7220 is configured to receive the visible light
the infrared light may be infrared continuous modulated pulsed light. The optical transmitting lens 7100 may be a second floodlight irradiator 7110 configured to emit the infrared continuous modulated pulsed light. The second floodlight irradiator 7110 is positioned under the terminal screen, and the first infrared receiver 7210 or the visible light receiver 7220 is positioned under the second floodlight irradiator 7110. Specifically, when the optical filter 7230 reflects visible light to the separation path, the visible light receiver 7220 is located under the second floodlight irradiator 7110, and when the optical filter 7230 reflects visible light to the separation path, the first infrared receiver 7210 is located under the second floodlight irradiator 7110. The second floodlight irradiator 7110 includes a diffusion sheet 7111 and a high-power VCSEL 7112. The high-power VCSEL 7112 is configured to emit infrared continuous modulated pulsed light. The diffusion sheet 7111 is configured to control the infrared continuous modulated pulsed light emitted from the high-power VCSEL 7112 to diffuse toward the target object. The first infrared receiver 7210 used in the TOF scheme has more complicated internal structures and higher performance requirements. The TOF is surface-emitting light that can form a three-dimensional image in one operation, and a zero baseline may be provided between the optical transmitting lens and the optical receiving lens, so that the whole structure is more compact, and the region in the terminal display screen where special processing is desired to increase the transmittance can be minimized.

Specifically, the TOF is divided into indirect TOF (iTOF) and direct TOF (dTOF). The iTOF uses a VCSEL to emit infrared continuous modulated pulsed light and receive infrared light reflected by a target, performs homodyne demodulation to measure a phase shift of the reflected infrared light, and indirectly calculates time of flight of the light to predict a depth of the target. The dTOF, also called light detection and ranging (LiDAR), includes a VCSEL, a single photon avalanche diode (SPAD), and a time digital converter (TDC) as the core components, where the VCSEL emits pulse waves in a scenario, the SPAD receives pulse waves reflected by a target object, and the TDC records the time of flight (i.e., a time interval between the emitted pulse and the received pulse) of each received optical signal. The dTOF (Lidar) has a long detection distance and high-precision imaging characteristics, resulting in better night shooting, video and AR experience. At present, under-display TOF forward applications of common tablet mobile terminals mainly adopt iTOF, but for a foldable screen or other special-shaped mobile terminals, the dTOF can achieve a more ideal effect in a scenario where forward and backward under-display applications are switched back and forth.

In the photography apparatus according to the embodiment, an optical transmitting lens is used to transmit infrared light to a target object, and an optical receiving lens is used to receive the reflected red light and visible light reflected by the target object, so that depth information and a two-dimensional image for constructing a three-dimensional image of the target object can be acquired, where the optical receiving lens receives first reflected infrared light via an internal first infrared receiver, and receives visible light via an internal visible light receiver, and by providing an optical filter in the light incidence path, the first reflected infrared light and the visible light are separated from the incident light, so that the two types of light can be received simultaneously by a single optical receiving lens. The second floodlight irradiator emits infrared continuous modulated pulsed light, the target object reflects the infrared continuous modulated pulsed light and other light rays, the first infrared receiver receives reflected infrared light reflected by the target object, and the visible light receiver receives visible light reflected by the target object, so that the mobile terminal can acquire the reflected infrared light and the visible light, a three-dimensional image of the target object can be constructed according to a TOF scheme, and the number of lenses used for three-dimensional recognition can be reduced by multiplexing the optical receiving lens. As a result, the number of lenses used for TOF three-dimensional recognition on the display screen are reduced from at least three to two, and thus, the area occupied by the optical transmitting lens and the optical receiving lens in the display screen can be simply processed to reduce the area that needs non-normal display processing in the terminal display screen, increase an area for normal display in the terminal display screen, and improve the user experience. Meanwhile, the second floodlight irradiator is positioned under the terminal screen, and the first infrared receiver or the visible light receiver is positioned under the second floodlight irradiator. In other words, the second floodlight irradiator and the first infrared receiver or the visible light receiver are arranged in a stacked manner to increase a utilization rate of the under-display space.

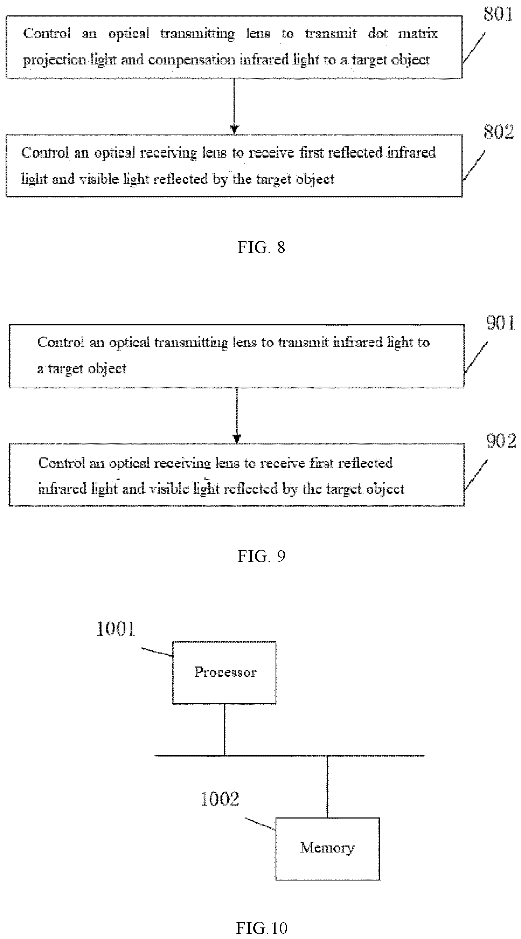

An embodiment of the present application further relates to a photography method which, as shown in FIG. 8, includes the following operations:
at operation 801, an optical transmitting lens is controlled to transmit dot matrix projection light and compensation infrared light to a target object;
at operation 802, an optical receiving lens is controlled to receive first reflected infrared light and visible light reflected by the target object;
wherein the visible light and the first reflected infrared light are configured for three-dimensional recognition of the target object. The first reflected infrared light is configured to construct depth information of the target object, the visible light is configured to construct a two-dimensional image of the target object, and the depth information and the two-dimensional image are used for constructing a three-dimensional image of the target obj ect;
the optical receiving lens includes a first infrared receiver, a visible light receiver and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the optical transmitting lens includes a first floodlight irradiator, an infrared dot matrix projector, and a reflector; the first floodlight irradiator is configured to emit compensation infrared light, and the infrared dot matrix projector is configured to emit dot matrix projection light;
the reflector is arranged in a light emission path of the optical transmitting lens. The light emission path includes a merging path, an initial emission path of the dot matrix projection light, and an initial emission path of the compensation infrared light. Initial emission paths of the dot matrix projection light and the compensation infrared light form an intersection angle, and the dot matrix projection light and the compensation infrared light, after passing through the reflector, are emitted along the merging path.

An embodiment of the present application further relates to another photography method which, as shown in FIG. 9, includes the following operations:
at operation 901, an optical transmitting lens is controlled to transmit infrared light to a target object;
at operation 302, an optical receiving lens is controlled to receive first reflected infrared light and visible light reflected by the target object;
wherein the visible light and the first reflected infrared light are configured for three-dimensional recognition of the target object. The first reflected infrared light is configured to construct depth information of the target object, the visible light is configured to construct a two-dimensional image of the target object, and the depth information and the two-dimensional image are used for constructing a three-dimensional image of the target obj ect;
the optical receiving lens includes a first infrared receiver, a visible light receiver, and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the infrared light includes infrared continuous modulated pulsed light;
the optical transmitting lens includes a second floodlight irradiator configured to emit the infrared continuous modulated pulsed light;
the second floodlight irradiator is positioned under the terminal screen, and the first infrared receiver or the visible light receiver is positioned under the second floodlight irradiator.

In one example, the photography method is applied to three-dimensional recognition, in which the first infrared receiver receives, with a wider spectrum, two paths of narrower spectrum light at different bands simultaneously emitted from the floodlight irradiator and the dot matrix projector, so as to effectively decompose the two paths of light and convert them into three-dimensional and two-dimensional point clouds subjected to coordinate registration. The final fusion to enhance the three-dimensional image enhancement specifically includes the following processes:

At a first operation, the processor separates signals obtained by performing photoelectric conversion on a first infrared band light from the floodlight irradiator reflected by the target object and a second infrared band light from the dot matrix projector received by the infrared receiver, which operation may be implemented by loading an AI engine to perform cluster analysis.

At a second operation, the two types of separated photoelectric data are respectively subjected to pre-processing to realize data filtering and compression.

At a third operation, stereo registration is performed on the two-dimensional image data of the reflected light from the floodlight irradiator and the three-dimensional image data of the reflected light from the dot matrix projector (pixel coordinates, image coordinates, camera coordinates and world coordinates of the two images are calibrated, to map points in a real three-dimensional space with two-dimensional and three-dimensional superposition to a two-dimensional imaging plane) to find key feature points, and the two types of data are converted into the same coordinate system to determine a relation of spatial coordinates of corresponding points in the two images.

At a fourth operation, point cloud data which is easy to store and process is formed and used for expanding high-dimensional feature information.

At a fifth operation, the AI engine is loaded again, and a deep learning method is used to classify and split the three-dimensional point cloud (which is implemented by learning cross transform according to input points and then using the learned cross transform for weighting input features associated with the points and rearranging the input features into a potential implicit standard sequence, and then calculating a product or sum of elements).

At a sixth operation, three-dimensional image recognition or reconstruction is implemented.

According to the above operations, the two-dimensional image data of the floodlight irradiator can effectively compensate insufficiency of the three-dimensional image data from dot matrix projection, so that the three-dimensional recognition effect is enhanced, and safe unlocking and payment of a user under either strong light or dark light, as well as game modeling, virtual reality and augmented reality, are further facilitated.

An embodiment of the present application further relates to an electronic device which, as shown in FIG. 10, includes at least one processor 1001; a memory 1002 in communicative connection with the at least one processor. The memory 1002 stores instructions executable by the at least one processor 1001 thereon which, when executed by the at least one processor 1001, cause the photography method as described above to be implemented.

The memory 1002 and processor 1001 are connected via a bus. The bus may include any number of interconnected buses and bridges, and connect various circuits of the one or more processors 1001 and the memory 1002 together. The bus may also connect various other circuits such as peripherals, voltage regulators, power management circuits, and the like, which are well known in the art and, therefore, will not be described in further details herein. A bus interface provides an interface between the bus and a transceiver. The transceiver may include one or more elements, such as a plurality of receivers and transmitters, to provide a unit for communication with various other apparatuses over a transmission medium. Information processed by the processor 1001 is transmitted over a wireless medium through an antenna which further receives information and transmits the information to the processor 1001.

The processor 1001 is responsible for managing the bus and general processing, and may further provide various functions including timing, peripheral interfaces, voltage regulation, power management, and other control functions. The memory 1002 may be configured to store information used by the processor during operation.

An embodiment of the present application of further relates to a computer readable storage medium with a computer program stored thereon. The computer program, when executed by a processor, causes any of the above method embodiments to be implemented.

That is, as can be understood by those skilled in the art, all or part of the operations in any of the method embodiments described above may be implemented by a program instructing related hardware, where the program is stored in a storage medium and includes micro controller unit several instructions to enable a device (which may be a micro controller unit, a chip, or the like) or a processor to perform all or part of the operations in the method described in various embodiments of the present application. The storage medium mentioned before includes: a U disk, a mobile hard disk, a read-only memory (ROM), a random access memory (RAM), a magnetic or optical disk, or any other medium that can store program codes.

It will be understood by those of ordinary skill in the art that the foregoing embodiments are specific embodiments of the present application, and that, in practical applications, various changes in form and details may be made therein without departing from the spirit and scope of the present application.

## Claims

1. A photography apparatus, comprising:
an optical transmitting lens configured to transmit dot matrix projection light and compensation infrared light to a target object;
an optical receiving lens configured to receive first reflected infrared light and visible light reflected by the target object;
wherein the visible light and the first reflected infrared light are configured for three-dimensional recognition of the target object;
the optical receiving lens comprises a first infrared receiver, a visible light receiver, and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the optical transmitting lens comprises a first floodlight irradiator, an infrared dot matrix projector, and a reflector; the first floodlight irradiator is configured to emit the compensation infrared light, and the infrared dot matrix projector is configured to emit the dot matrix projection light;
the reflector is arranged in a light emission path of the optical transmitting lens, wherein the light emission path comprises a merging path, an initial emission path of the dot matrix projection light, and an initial emission path of the compensation infrared light, the initial emission paths of the dot matrix projection light and the compensation infrared light form an intersection angle, and the dot matrix projection light and the compensation infrared light, after passing through the reflector, are emitted along the merging path.

2. The photography apparatus according to claim 1, wherein the intersection angle satisfies a total reflection condition of the reflector;
the reflector comprises an infrared total reflection lens configured to reflect and transmit the dot matrix projection light and the compensation infrared light at the same time, and emit the same along the merging path.

3. The photography apparatus according to claim 1 or 2, wherein the reflector comprises a movable infrared reflector configured to control the dot matrix projection light and the compensation infrared light to be emitted along the merging path in a time-sharing manner.

4. The photography apparatus according to any one of claims 1 to 3, wherein the optical transmitting lens further comprises: a second infrared receiver and a rotating device; the second infrared receiver is configured to receive second reflected infrared light reflected by the target object;
the rotating device is provided with the second infrared receiver on one side and the infrared dot matrix projector or the first floodlight irradiator on the other side, and the rotating device is configured to rotate, after the infrared dot matrix projector or the first floodlight irradiator emits the dot matrix projection light or the compensation infrared light, to the other side so that the second infrared receiver receives the second reflected infrared light.

5. The photography apparatus according to any one of claims 1 to 4, wherein the photography apparatus further comprises: a light sensing device positioned in a first non-display region between a light-transmitting region of the optical transmitting lens and an edge of a terminal screen, or a second non-display region between a light-transmitting region of the optical receiving lens and the edge of the terminal screen.

6. A photography apparatus, comprising:
an optical transmitting lens configured to transmit infrared light to a target object;
an optical receiving lens configured to receive first reflected infrared light and visible light reflected by the target object;
wherein the visible light and the first reflected infrared light are configured for three-dimensional recognition of the target object;
the optical receiving lens comprises a first infrared receiver, a visible light receiver, and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the infrared light comprises infrared continuous modulated pulsed light;
the optical transmitting lens comprises a second floodlight irradiator configured to emit the infrared continuous modulated pulsed light;
the second floodlight irradiator is positioned under the terminal screen, and the first infrared receiver or the visible light receiver is positioned under the second floodlight irradiator.

7. A photography method, comprising:
controlling an optical transmitting lens to transmit dot matrix projection light and compensation infrared light to a target object;
controlling an optical receiving lens to receive first reflected infrared light and visible light reflected by the target object;
wherein the visible light and the first reflected infrared light are configured for three-dimensional recognition of the target object;
the optical receiving lens comprises a first infrared receiver, a visible light receiver and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the optical transmitting lens comprises a first floodlight irradiator, an infrared dot matrix projector and a reflector; the first floodlight irradiator is configured to emit the compensation infrared light, and the infrared dot matrix projector is configured to emit the dot matrix projection light;
the reflector is arranged in a light emission path of the optical transmitting lens, wherein the light emission path comprises a merging path, an initial emission path of the dot matrix projection light, and an initial emission path of the compensation infrared light, the initial emission paths of the dot matrix projection light and the compensation infrared light form an intersection angle, and the dot matrix projection light and the compensation infrared light, after passing through the reflector, are emitted along the merging path.

8. A photography method, comprising:
controlling an optical transmitting lens to transmit infrared light to a target object;
controlling an optical receiving lens to receive first reflected infrared light and visible light reflected by the target object;
wherein the visible light and the first reflected infrared light are configured for three-dimensional recognition of the target object;
the optical receiving lens comprises a first infrared receiver, a visible light receiver and an optical filter;
the optical filter is arranged in a light incidence path of the optical receiving lens, and configured to filter and separate incident light to obtain the first reflected infrared light and the visible light which are transmitted along the light incidence path and a separation path perpendicular to the light incidence path;
the first infrared receiver is configured to receive the first reflected infrared light, and the visible light receiver is configured to receive the visible light;
the infrared light comprises infrared continuous modulated pulsed light;
the optical transmitting lens comprises a second floodlight irradiator configured to emit the infrared continuous modulated pulsed light;
the second floodlight irradiator is positioned under the terminal screen, and the first infrared receiver or the visible light receiver is positioned under the second floodlight irradiator.

9. An electronic device, comprising:
at least one processor; and
a memory in communicative connection with the at least one processor;
the memory stores instructions executable by the at least one processor which, executed by the at least one processor, enable the at least one processor to implement the photography method according to claim 7 or 8.

10. A computer-readable storage medium having a computer program stored thereon which, when executed by a processor, causes the photography method according to claim 7 or 8 to be implemented.
